# EUROPÄISCHE PATENTSCHRIFT

(11) **EP 3 113 904 B1**
(45) Veröffentlichungstag und Bekanntmachung des Hinweises auf die Patenterteilung: **22.07.2020**
(21) Anmeldenummer: 15707358.6
(22) Anmeldetag: 02.03.2015
(51) Int. Cl.: B23K 37/00, B23K 26/14

(54) **BEARBEITUNGSKOPF UND BEARBEITUNGSEINRICHTUNG**
PROCESSING HEAD AND PROCESSING DEVICE
TÊTE D'USINAGE ET DISPOSITIF D'USINAGE

(30) Priorität: 04.03.2014 EP 14157566
(43) Veröffentlichungstag der Anmeldung: 11.01.2017
(73) Patentinhaber: Oerlikon Metco AG, Wohlen, 5610 Wohlen (CH)
(72) Erfinder: PETERS, Thomas, CH-5600 Lenzburg (CH); LEUPPI, Tobias, CH-5605 Dottikon (CH); GISLER, Andreas, CH-8412 Riet bei Neftenbach (CH)
(74) Vertreter: Intellectual Property Services GmbH
(86) Internationale Anmeldenummer: PCT/EP2015/054238
(87) Internationale Veröffentlichungsnummer: WO 2015/132171

(56) Entgegenhaltungen:
- WO-A1-93/00171
- WO-A1-95/20458
- DE-A1- 10 035 622
- US-A1- 2012 152 927

## Beschreibung

Die Erfindung betrifft einen Bearbeitungskopf zur Oberflächenbearbeitung mittels Laserstrahl gemäss dem Oberbegriff des Anspruchs 1 (siehe WO-A-93/00171) und eine Bearbeitungseinrichtung umfassend den Bearbeitungskopf.

Aus dem Stand der Technik ist es bekannt, mittels eines Laserauftragschweiss-Verfahrens Pulver auf einem Bauteil aufzubringen. Hierzu wird das Pulver unter anderem mittels eines Bearbeitungskopfes zum Bauteil gefördert, wobei das Pulver zu einem Schmelzfleck gefördert wird, der zuvor mittels des Lasers aufgeschmolzen wurde. Üblicherweise wird der Laser durch einen Laserdurchgangskanal des Bearbeitungskopfes geführt und in einem Abstand von 10 mm bis 20 mm von einer Austrittsseite des Bearbeitungskopfes fokussiert. Zudem wird das Pulver über zumindest einen Pulverzufuhrkanal durch den Bearbeitungskopf gefördert. Dabei kann der Bearbeitungskopf einen oder mehrere Pulverzufuhrkanäle aufweisen, deren Auslassöffnungen auf der Austrittsseite des Bearbeitungskopfes meist um die Austrittsöffnung des Laserstrahls angeordnet sind; alternativ kann der Pulverzufuhrkanal als Ringspalt ausgebildet sein, der um den Laserdurchgangskanal angeordnet ist.

Während der Durchführung des Laserauftragschweiss-Verfahrens kann es unter Umständen zu einer starken Erhitzung des Bearbeitungskopfes kommen, da etwa 1/3 bis 2/3 der zugeführten Laserleistung reflektiert werden, die im Wesentlichen auf den Bearbeitungskopf treffen. Die reflektiert Anteil ist dabei von dem verwendeten Laser im Wesentlichen basierend auf der Wellenlänge abhängig. Beispielsweise geht man davon aus, dass bei Nd:YAG-, Faser-, Scheiben- oder Diodenlasern üblicherweise etwa 1/3 der Leistung reflektiert wird und bei CO₂-Lasern bis zu 2/3 der Leistung.

Aus der US 7,259,353 ist eine Einrichtung zur Kühlung des Bearbeitungskopfes beim Laserauftragschweissen bekannt. Hier wird vorgeschlagen, um den Bearbeitungskopf einen Kühlmantel anzuordnen mit möglichst grossem Volumen, um eine möglichst effiziente Kühlung zu ermöglichen.

Der vorbekannte Stand der Technik weist jedoch den Nachteil auf, dass die Kühlleistung nicht immer ausreichend ist. Zudem vergrössert der grossvolumige Kühlmantel den Bearbeitungskopf signifikant, was im Betrieb nachteilig sein kann. Weiterhin können die vorbekannten Betriebsköpfe unter anderem durch ein aufwendiges Herstellungsverfahren oder durch hohen Materialverbrauch zu kostspielig sein; dies ist zudem nachteilig, da die Betriebsköpfe recht häufig ausgetauscht werden müssen. Ein weiterer Nachteil ist eine unter Umständen unzureichende Kühlung der dem zu bearbeitenden Bauteil zugewandten Spitze des Bearbeitungskopfes.

In der WO 95/ 20458 A1 wird ein Bearbeitungskopf zur Oberflächenbearbeitung mittels Laserstrahl beschrieben, der einen Körper und eine Hülse zur Anordnung am Körper umfasst. Körper und Hülse bilden zusammen einen Kühlkanal des Bearbeitungskopfs. Der Bearbeitungskopf weist darüber hinaus noch eine Vielzahl von weiteren Bauelementen auf.

Es ist daher insbesondere eine Aufgabe der vorliegenden Erfindung, die Nachteile des Bekannten zu vermeiden, insbesondere also einen Bearbeitungskopf bereitzustellen, der einfach und kostengünstig herstellbar ist, der eine kompakte Bauweise aufweist und eine hohe Kühlleistung im Betrieb gewährleistet.

Diese Aufgabe wird gelöst durch den Bearbeitungskopf gemäß Anspruch 1.

Die abhängigen Ansprüche betreffen bevorzugte Ausführungsformen der vorliegenden Erfindung.

Die Erfindung betrifft einen Bearbeitungskopf zur Oberflächenbearbeitung mittels Laserstrahl. Der Bearbeitungskopf umfasst einen

Laserdurchgangskanal mit einer Längsachse, zumindest einen Pulverzufuhrkanal und einen Kühlkanal zur Kühlung des Bearbeitungskopfes. Der Bearbeitungskopf ist zumindest zweiteilig ausgebildet und umfasst einen einstückigen Körper und eine Hülse. Die Hülse ist geeignet zur Anordnung am Körper. Der Laserdurchgangskanal und der Pulverzufuhrkanal sind im Körper ausgebildet. Der Körper bildet zumindest teilweise eine erste Seitenwand des Kühlkanals. Die Hülse bildet zumindest teilweise eine zweite Seitenwand des Kühlkanals.

Dies hat den Vorteil, dass die notwendigen Ausnehmungen zur Bildung des Kühlkanals vor der Anordnung der Hülse am Körper angebracht werden können, was die Herstellung einfach und kostengünstig macht. Ausserdem wird durch die Anordnung des Laserdurchgangskanals und der Pulverzufuhrkanal im Körper ermöglicht, dass nur wenige Bauelemente für den Bearbeitungskopf notwendig sind. Zudem kann der Kühlkanal problemlos so angeordnet werden, dass eine ausreichende Kühlung des Bearbeitungskopf und insbesondere der Spitze des Bearbeitungskopfes gewährleistet werden kann, da durch die im Herstellungsprozess einfache Ausbildung des Kühlkanals beispielsweise ein als Labyrinth ausgebildeter Wärmetauscher herstellbar ist. Die Ausnehmungen können dabei im Körper und/oder der Hülse angebracht werden, wobei der Kühlkanal nach der Anordnung der Hülse am Körper durch die Hülse gebildet wird. Im Betrieb wird dabei ein Kühlmedium wie beispielsweise Wasser durch den Kühlkanal gefördert zur Abführung der Wärme.

Der Kühlkanal kann dabei mit einem spanenden Verfahren wie beispielsweise einem Fräsverfahren gebildet werden. Alternativ können der Körper und/oder die Hülse mit dem Kühlkanal in einem formgebenden Verfahren wie beispielsweise einem Druckgussverfahren gebildet werden.

Insbesondere bilden der Körper und die Hülse in einem Abschnitt von zumindest 50%, bevorzugt zumindest 75% und besonders bevorzugt zumindest 90'% der Gesamtlänge des Kühlkanals im Bearbeitungskopf die erste Seitenwand und die zweite Seitenwand.

Der Bearbeitungskopf weist insbesondere nur einen einzigen Laserdurchgangskanal auf. Es ist aber auch möglich, dass er mehrere Laserdurchgangskanäle aufweist.

Der genannte Körper des Bearbeitungskopfs ist einstückig ausgeführt und insbesondere aus einem homogenen Rohteil, beispielsweise aus einem Block aus Kupfer oder einer Kupferlegierung gefertigt.

Häufig wird der Bearbeitungskopf auch als Pulverdüse bezeichnet. Der Körper wird häufig als Nabenkörper oder Düsenkörper bezeichnet.

Bevorzugt sind der Körper und die Hülse lösbar verbindbar. Insbesondere sind der Körper und die Hülse miteinander verschraubbar.

Dies hat den Vorteil, dass bei Bedarf eines der beiden Teile ausgetauscht werden kann. Da die Hülse das äussere Bauteil darstellt, welche im Betrieb höheren thermischen Belastungen ausgesetzt ist, wird diese unter Umständen häufiger ausgetauscht. Da es sich bei der Hülse meist um das kostengünstigere Teil handelt, werden somit die Kosten im Betrieb weiter verringert. Zudem kann durch die lösbare Verbindung die Hülse einfach entfernt werden zur einfachen Reinigung des Kühlkanals einfach gereinigt werden.

Bevorzugt sind der Körper und die Hülse fest verbunden Insbesondere sind der Körper und die Hülse miteinander verlötet.

Dies hat den Vorteil, dass eine kompaktere Bauweise des Bearbeitungskopfes erreichbar ist, da beispielsweise auf die Anordnung eines Gewindes verzichtet werden kann.

Bevorzugt weist der Körper einen ersten Förderkanal und einen zweiten Förderkanal zur Zu- und Abfuhr von Kühlmedium zum und vom Kühlkanal auf.

Dies hat den Vorteil, dass zur Ausbildung der für die Zu- und Abfuhr des Kühlmediums zum Kühlkanal kein weiteres Bauteil notwendig ist. Dies ermöglicht einen besonders einfachen und damit kostengünstigen Aufbau des Bearbeitungskopfs.

Bevorzugt besteht der Bearbeitungskopf aus dem Kopf, der Hülse und optional Dichtungen, insbesondere nur eine Dichtung, beispielsweise in Form eines O-Rings. Insbesondere könnten am Bearbeitungskopf Kleinteile angeordnet sein, die in diesem Zusammenhang aber nicht dem Bearbeitungskopf zugerechnet werden.

Dies hat den Vorteil, dass der Bearbeitungskopf nur aus sehr wenigen Bauteilen besteht und damit besonders einfach und kostengünstig ist.

Bevorzugt ist der Kühlkanal als Kühlschlange oder Kühlspirale ausgebildet. Dies hat den Vorteil einer Erreichbarkeit einer hohen Kühlleistung bei optimiertem Verbrauch an Kühlmedium. Zudem können bei Kühlschlangen oder Kühlspiralen die das Kühlmedium führenden Bereiche im Wesentlichen ohne scharfe Ecken, scharfe Kanten sowie vorspringende oder rückspringende Stufen ausgebildet werden, so dass das ein entsprechender Druckverlust vermeidbar ist. Hierdurch erhöht sich die Kühlleistung weiter.

Bevorzugt ist der Kühlkanal im Körper oder in der Hülse angeordnet. Mit anderen Worten ist der Kühlkanal lediglich in dem Körper oder in der Hülse angeordnet; wenn der Kühlkanal lediglich in dem Körper angeordnet ist, bildet die Hülse lediglich die zweite Seitenwand; wenn der Kühlkanal lediglich in der Hülse angeordnet ist, bildet der Körper lediglich die erste Seitenwand.

Die Anordnung des Kühlkanals lediglich in dem Körper hat den Vorteil, dass die Hülse mit geringer Wandstärke ausgebildet werden kann, um eine kompakte Bauweise zu erreichen.

Die Anordnung des Kühlkanals lediglich in der Hülse hat den Vorteil, dass die Kühlung noch effizienter ausgestaltet ist, da der Kühlkanal nahe an der warmen Aussenseite des Bearbeitungskopfes angeordnet ist.

Bevorzugt ist der Kühlkanal im Körper und in der Hülse angeordnet. Dies hat den Vorteil, dass der Kühlkanal mit grossem Strömungsquerschnitt ausbildbar ist für eine weiter erhöhte Kühlleistung.

Bevorzugt ist eine Dichtung in einem einer Austrittsseite des Laserstrahls zugewandten Bereich angeordnet zur Abdichtung des Kühlkanals. Insbesondere ist die Dichtung als ein Dichtring ausgebildet, der bevorzugt in eine Nut des Körpers einsetzbar ist.

Dies hat den Vorteil, dass eine gute Abdichtung zwischen Körper und Hülse gewährleistet werden kann, so dass das Kühlmedium im Betrieb nicht austreten und auf das zu bearbeitende Bauteil gelangen kann.

Selbstverständlich kann eine weitere Dichtung auf der der Austrittsseite des Laserstrahls abgewandten Seite zwischen Hülse und Körper, bevorzugt analog zur obigen Dichtung, angeordnet werden. Dies hat den Vorteil, dass das Kühlmedium im Betrieb nicht austreten und auf das zu bearbeitende Bauteil gelangen kann
Bevorzugt sind der Körper und die Hülse in zumindest einem Abschnitt zur Austrittsseite hin zulaufend ausgebildet sind. Insbesondere sind der Körper und die Hülse in zumindest einem Abschnitt zur Austrittsseite hin konisch zulaufend ausgebildet sind. Mit anderen Worten ist der Bearbeitungskopf in zumindest einem Abschnitt zur Austrittsseite hin insbesondere konisch zulaufend ausgebildet.

Die Hülse und der Körper können beispielsweise derart ausgebildet sein, dass ein von der Austrittsseite abgewandter Abschnitt der Hülse und des Körpers zylindrisch ausgebildet ist; ein der Austrittsseite zugewandter Abschnitt der Hülse und des Körpers kann konisch zulaufend sein. Im zylindrischen Abschnitt kann ein Gewinde angeordnet werden zur lösbaren Befestigung der Hülse am Körper. Der Körper und die Hülse sind dabei mit derart aufeinander angepassten Formen ausgebildet, dass die Hülse am Körper erfindungsgemäss befestigbar ist.

Die Ausbildung des Bearbeitungskopfes mit einem insbesondere konisch zulaufenden Abschnitt hat den Vorteil, dass der Bearbeitungskopf zum Bauteil hin einen kleineren Querschnitt aufweist und somit einfacher handhabbar ist.

Bevorzugt ist der Kühlkanal zumindest teilweise und bevorzugt vollständig im zulaufenden Abschnitt angeordnet. Dies hat den Vorteil, dass der der Austrittsseite zugewandte Abschnitt, der im Betrieb meist am stärksten erwärmt wird, effizient gekühlt wird.

Bevorzugt ist zumindest ein Abschnitt des Kühlkanals parallel zu einer Ebene senkrecht zur Längsachse A angeordnet ist. Dies hat den Vorteil, dass ein Abschnitt des Kühlkanals um den Körper im Wesentlichen an einer axialen Position geführt wird, wodurch sich ein langer Kühlkanal mit einer effizienten Kühlung realisieren lässt.

Bevorzugt sind zumindest ein erster Abschnitt und ein zweiter Abschnitt des Kühlkanals parallel zur Längsachse A voneinander beabstandet. Dies hat den Vorteil, dass eine effiziente Kühlung des Bearbeitungskopfes parallel zur Längsachse erreichbar ist, da der Kühlkanal entlang des Bearbeitungskopfes angeordnet ist.

Bevorzugt weist der Kühlkanal eine erste Förderöffnung und eine zweite Förderöffnung zur Zufuhr und/oder Abfuhr eines Kühlmediums auf. Die erste Förderöffnung und die zweite Förderöffnung sind parallel zur Längsachse A voneinander beabstandet. Beispielsweise kann durch die erste Förderöffnung ein Kühlmedium in den Kühlkanal gefördert werden und aus dem Kühlkanal durch die zweite Förderöffnung gefördert werden. Selbstverständlich kann die Förderung des Kühlmediums auch in umgekehrter Richtung erfolgen.

Dies hat den Vorteil, dass das Kühlmedium lediglich einmal zur Kühlung des Bearbeitungskopfes verwendet wird, bevor es aus dem Bearbeitungskopf gefördert wird. Selbstverständlich ist auch ein Kreislaufbetrieb für das Kühlmedium möglich, bei dem das Kühlmedium nach der Förderung aus dem Kühlkanal aktiv und/oder passiv gekühlt wird und anschliessend wieder in den Kühlkanal gefördert wird, was vorteilhaft eine Verringerung des Verbrauchs an Kühlmedium erreicht.

Unter Umständen ist es vorteilhaft, das Kühlmedium in die Förderöffnung zuzuführen, die näher zur Austrittsseite angeordnet ist, da die Austrittsseite häufig am wärmsten ist. Da das Kühlmedium während der Förderung durch den Kühlkanal aufgewärmt wird, ist somit zu Beginn der Förderung des Kühlmediums durch den Kühlkanal eine effizientere Kühlung möglich, was für die Kühlung des heissen, der Austrittsseite zugewandten Bereichs vorteilhaft ist.

Bevorzugt steht der erste Förderöffnung in Strömungsverbindung mit dem ersten Förderkanal und die zweite Förderöffnung steht in Strömungsverbindung mit dem zweiten Förderkanal. Der erste Förderkanal und/oder der zweite Förderkanal sind zumindest in einem Abschnitt im Wesentlichen in einem gleichen Neigungswinkel zur Längsachse wie der Pulverzufuhrkanal angeordnet.

Dies hat den Vorteil, dass der Bearbeitungskopf kompakt ausgestaltet werden kann.

Bevorzugt ist der Kühlkanal auf einer der Längsachse A abgewandten Seite des Laserdurchgangskanals und insbesondere des zumindest einen Pulverzuführungskanals angeordnet ist. Mit anderen Worten ist der Kühlkanal aussenliegend im Bearbeitungskopf angeordnet und wird um den Laserdurchgangskanal und insbesondere um den zumindest einen Pulverzuführungskanal geführt.

Dies hat den Vorteil, dass eine Kühlung der äusseren Bereiche des Bearbeitungskopfes, die meist den höchsten thermischen Belastungen ausgesetzt sind, gewährleistet werden kann.

Bevorzugt sind die Hülse und insbesondere der Körper im Wesentlichen aus einem Material mit einer Wärmeleitfähigkeit grösser als 300 W / (m x K) hergestellt. Bevorzugt weist das Material eine Wärmeleitfähigkeit grösser als 340 W / (m x K) und besonders bevorzugt grösser als 380 W / (m x K) auf. Beispielsweise kann das Material Kupfer oder auch eine Kupferlegierung sein.

Dies hat den Vorteil, dass zusätzlich zur Kühlung mittels des Kühlmediums die Wärme durch die Materialauswahl gut abführbar ist, beispielsweise durch Leitung der Wärme zum Kühlmedium.

Ein weiterer Aspekt der vorliegenden Erfindung betrifft eine Bearbeitungseinrichtung zur Oberflächenbearbeitung mittels Laserstrahl. Die Bearbeitungseinrichtung umfasst einen Bearbeitungskopf wie oben beschrieben.

Weitere Merkmale und Vorteile der Erfindung werden nachfolgend anhand von Ausführungsbeispielen zum besseren Verständnis näher erläutert, ohne dass die Erfindung auf die Ausführungsbeispiele zu beschränken ist. Es zeigen:
- Fig.1: Schematische Darstellung eines erfindungsgemässen Bearbeitungskopfes in einer Seitenansicht;
- Fig. 2: Vorderansicht des Bearbeitungskopfes gemäss Figur 1 mit Hülse;
- Fig. 3: Vorderansicht des Bearbeitungskopfes gemäss Figur 2 ohne Hülse;
- Fig. 4: Schematische Darstellung eines Ausschnitts einer Bearbeitungseinrichtung mit einem Bearbeitungskopf gemäss Figur 1.

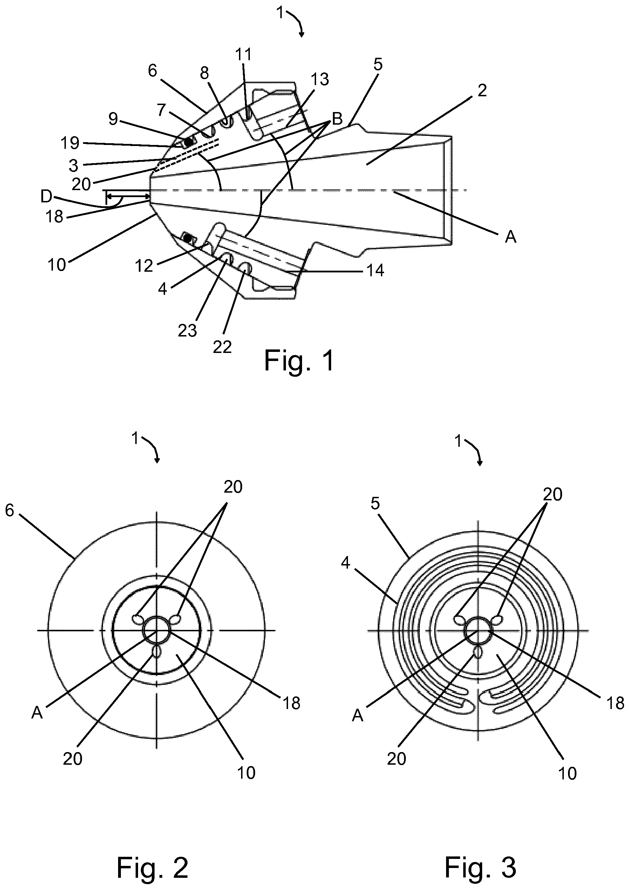

In Figur 1 ist in schematischer Darstellung ein erfindungsgemässer Bearbeitungskopf 1 in einer Seitenansicht dargestellt. Der Bearbeitungskopf 1 ist zweiteilig ausgebildet und umfasst einen Körper 5 sowie eine am Körper 5 lösbar befestigte Hülse 6. Selbstverständlich kann die Hülse 6 auch fest mit dem Körper 5 verbunden sein, beispielsweise durch ein Verlöten.

Der Bearbeitungskopf 1 weist eine Austrittsseite 10 auf, in der eine Austrittsöffnung 18 für einen Laserstrahl angeordnet ist. Zudem ist auf der Austrittsseite 10 eine Auslassöffnung 20 eines Pulverkanals 3 angeordnet zur Förderung von Pulver zu einem zu bearbeitenden Bauteil; die Auslassöffnung und der Pulverkanal 3 sind gestrichelt nur zur Illustration dargestellt, da der Pulverkanal bezogen auf eine Rotation um die Längsachse A in einer anderen Schnittebene als bspw. ein erster Förderkanal 13 liegt.

Der Bearbeitungskopf 1 ist in einem Abschnitt zur Austrittsseite 10 hin konisch zulaufend ausgebildet.

Der Körper 5 weist auf der der Austrittsseite 10 abgewandten Seite ein hier nicht dargestelltes Gewinde auf, mittels dem die Hülse 6 mit dem Körper 5 verschraubbar ist; hierzu weist die Hülse 6 innenseitig ein hier nicht dargestelltes komplementäres Gewinde auf.

Im konisch zu laufenden Abschnitt des Körpers ist ein als Kühlschlange ausgebildeter Kühlkanal 4 angeordnet; dieser Kühlkanal 4 kann beispielsweise mit einem Fräser in den Körper 5 gefräst werden. Alternativ zur Ausbildung als Kühlschlange kann der Kühlkanal 4 selbstverständlich auch als Kühlspirale ausgebildet werden.

Ein erster Abschnitt 22 des Kühlkanals 4 ist parallel zu einer Ebene senkrecht zur Längsachse A angeordnet. Zudem sind der erste Abschnitt 22 und ein zweiter Abschnitt 23 des Kühlkanals 4 parallel zur Längsachse voneinander beabstandet.

Der Kühlkanal 4 weist eine erste Förderöffnung 11 und eine zweite Förderöffnung 12 zur Zufuhr und/oder Abfuhr eines Kühlmediums auf.

Der Körper 5 weist eine Nut 19 auf zur Aufnahme eines Dichtringes zur Bildung einer Dichtung 9. Zur Bildung einer weiteren Abdichtung kann bei Bedarf eine weitere Nut zur Aufnahme eines weiteren Dichtringes im Bereich des auf der der Austrittsseite 10 abgewandten Seite angeordneten Gewindes vorgesehen werden.

Der Bearbeitungskopf 1 weist einen Laserdurchgangskanal 2 mit der Längsachse A auf. Im Betrieb wird der Laser auf der der Austrittsseite 10 abgewandten Seite in den Laserdurchgangskanal 2 geführt, woraufhin der Laserstrahl sich entlang der Längsachse A ausbreitet und den Bearbeitungskopf 1 durch die Austrittsöffnung 18 verlässt.

Der Kühlkanal 4 weist eine erste Seitenwand 7 auf, die durch den Körper 5 gebildet wird. Eine zweite Seitenwand 8 wird durch die Hülse 6 gebildet. Das Kühlmedium kann somit entlang des Kühlkanals 4 im Wesentlichen parallel zu den Seitenwänden 7 und 8 gefördert werden.

Der Körper 5 weist die erste Förderöffnung 11 und die zweite Förderöffnung 12 zur Zufuhr und/oder Abfuhr des Kühlmediums auf. Die erste Förderöffnung 11 ist mit einem ersten Förderkanal 13 strömungsverbunden. Die zweite Förderöffnung 12 ist mit einem zweiten Förderkanal 14 strömungsverbunden. Mittels der Förderkanäle kann das Kühlmedium zum Kühlkanal 4 gefördert werden.

Die erste Förderöffnung 11 und die zweite Förderöffnung 12 sind parallel zur Längsachse A voneinander beabstandet.

Der Kühlkanal 4 ist auf einer der Längsachse A abgewandten Seite des Laserdurchgangskanals 2 und des Pulverzufuhrkanals 3 angeordnet.

Der Pulverzufuhrkanal 3 mit der Auslassöffnung 20 (gestrichelt dargestellt) ist zur Längsachse A derart geneigt, dass der Pulverstrahl in einem Abstand D von etwa 12 mm von der Austrittsöffnung 18 die Längsachse A schneidet. Der hier nicht dargestellte Laser wird nun so fokussiert, dass im Abstand D der Schmelzfleck auf einem Bauteil mittels des Lasers erzeugbar ist.

Der Pulverzufuhrkanal 3, der erste Förderkanal 13 und der zweite Förderkanal 14 sind in einem Abschnitt im Wesentlichen in einem gleichen Neigungswinkel B zur Längsachse A angeordnet.

In den Figuren 2 und 3 ist eine Vorderansicht des Bearbeitungskopfes 1 gemäss Figur 1 dargestellt. Figur 2 zeigt den Bearbeitungskopf 1 mit Hülse 6. Figur 3 zeigt den Bearbeitungskopf 1 ohne Hülse, weshalb der Kühlkanal 4 sichtbar ist.

Gleiche Referenzeichen bedeuten gleiche Merkmale in allen Figuren und werden nur bei Bedarf erneut erläutert.

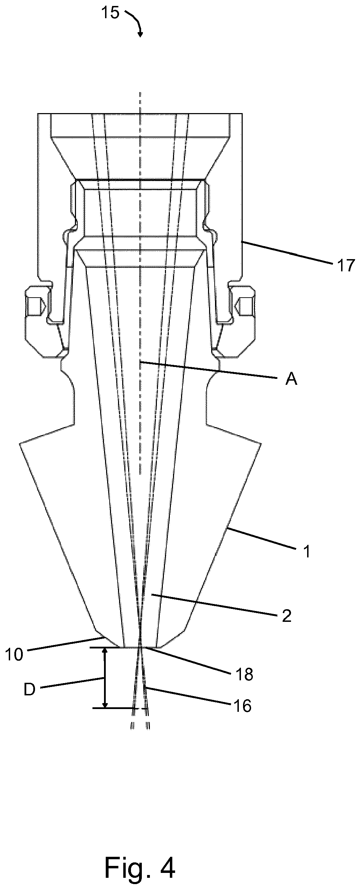

In Figur 4 ist in schematische Darstellung ein Ausschnitt einer Bearbeitungseinrichtung 15 mit einem Bearbeitungskopf 1 gemäss Figur 1 gezeigt.

Die Bearbeitungseinrichtung 15 umfasst eine Aufnahmehülse 17 für den Bearbeitungskopf 1. Der Laserstrahl 16 wird durch die Aufnahmehülse 17 und anschliessend durch den Bearbeitungskopf 1 geführt.

Der Laserstrahl 16 tritt durch die Austrittsöffnung 18 aus der Bearbeitungseinrichtung 15 aus und wird dabei so fokussiert, dass im Abstand D der Schmelzpunkt auf einem hier nicht dargestellten Bauteil erzeugbar ist, auf den dann das Pulver wie oben beschrieben gefördert wird.

Im Betrieb wird die Bearbeitungseinrichtung 15 mit einer hier nicht gezeigten Positioniereinrichtung über das Bauteil geführt, wodurch eine sogenannte Aufschweissraupe gebildet wird.

## Patentansprüche

1. Bearbeitungskopf (1) zur Oberflächenbearbeitung mittels Laserstrahl, wobei der Bearbeitungskopf (1) einen Laserdurchgangskanal (2) mit einer Längsachse (A), zumindest einen Pulverzufuhrkanal (3) und einen Kühlkanal (4) zur Kühlung des Bearbeitungskopfes (1) umfasst; und der Bearbeitungskopf (1) zumindest zweiteilig ausgebildet ist, und einen einstückigen Körper (5) und eine Hülse (6) zur Anordnung am Körper (5) umfasst; und der Laserdurchgangskanal (2) im Körper (5) ausgebildet ist; und der Körper (5) zumindest teilweise eine erste Seitenwand (7) des Kühlkanals (4) bildet und wobei die Hülse (6) zumindest teilweise eine zweite Seitenwand (8) des Kühlkanals (4) bildet, **dadurch gekennzeichnet, dass** der Pulverzufuhrkanal (3) im Körper (5) ausgebildet ist.

2. Bearbeitungskopf (1) nach Anspruch 1, **dadurch gekennzeichnet, dass** der Körper (5) einen ersten Förderkanal (13) und einen zweiten Förderkanal (14) zur Zu- und Abfuhr von Kühlmedium zum und vom Kühlkanal (4) aufweist.

3. Bearbeitungskopf (1) nach Anspruch 1 oder 2, **dadurch gekennzeichnet, dass** der Bearbeitungskopf (1) aus dem Kopf (5), der Hülse (6) und optional Dichtungen (9) besteht.

4. Bearbeitungskopf (1) nach einem der vorstehenden Ansprüche, **dadurch gekennzeichnet, dass** der Kühlkanal (4) als Kühlschlange oder Kühlspirale ausgebildet ist.

5. Bearbeitungskopf (1) nach einem der vorstehenden Ansprüche, **dadurch gekennzeichnet, dass** der Kühlkanal (4) im Körper (5) oder in der Hülse (6) angeordnet ist.

6. Bearbeitungskopf (1) nach einem der Ansprüche 1 bis 4, **dadurch gekennzeichnet, dass** der Kühlkanal (4) im Körper (5) und in der Hülse (6) angeordnet ist.

7. Bearbeitungskopf (1) nach einem der vorstehenden Ansprüche, **dadurch gekennzeichnet, dass** eine Dichtung (9), insbesondere ein Dichtring, in einem einer Austrittsseite (10) des Laserstrahls zugewandten Bereich angeordnet ist zur Abdichtung des Kühlkanals (4).

8. Bearbeitungskopf (1) nach einem der vorstehenden Ansprüche, **dadurch gekennzeichnet, dass** der Körper (5) und die Hülse (6) zur Austrittsseite (10) hin in zumindest einem Abschnitt insbesondere konisch zulaufend ausgebildet sind.

9. Bearbeitungskopf (1) nach einem der vorstehenden Ansprüche, **dadurch gekennzeichnet, dass** der Kühlkanal (4) zumindest teilweise, bevorzugt vollständig, im zulaufenden Abschnitt angeordnet ist.

10. Bearbeitungskopf (1) nach einem der vorstehenden Ansprüche, **dadurch gekennzeichnet, dass** der Kühlkanal (4) eine erste Förderöffnung (11) und eine zweite Förderöffnung (12) zur Zufuhr und/oder Abfuhr eines Kühlmediums aufweist, wobei die erste Förderöffnung (11) und die zweite Förderöffnung (12) parallel zur Längsachse (A) voneinander beabstandet sind.

11. Bearbeitungskopf (1) nach den Ansprüchen 2 und 10, **dadurch gekennzeichnet, dass** die erste Förderöffnung (11) in Strömungsverbindung mit dem ersten Förderkanal (13) und die zweite Förderöffnung (12) in Strömungsverbindung mit dem zweiten Förderkanal (14) steht, und wobei der erste Förderkanal (13) und/oder der zweite Förderkanal (14) zumindest in einem Abschnitt im Wesentlichen in einem gleichen Neigungswinkel (B) zur Längsachse (A) wie der Pulverzufuhrkanal (3) angeordnet sind.

12. Bearbeitungskopf (1) nach einem der vorstehenden Ansprüche, **dadurch gekennzeichnet, dass** der Kühlkanal (4) auf einer der Längsachse (A) abgewandten Seite des Laserdurchgangskanals(2) und insbesondere des zumindest einen Pulverzuführungskanals (3) angeordnet ist.

13. Bearbeitungskopf (1) nach einem der vorstehenden Ansprüche, **dadurch gekennzeichnet, dass** die Hülse (6) und insbesondere der Körper (5) im Wesentlichen aus einem Material mit einer Wärmeleitfähigkeit grösser als 300 W / (m x K), bevorzugt grösser als 340 W / (m x K) und besonders bevorzugt grösser als 380 W / (m x K) hergestellt ist.

14. Bearbeitungseinrichtung (15) zur Oberflächenbearbeitung mittels Laserstrahl umfassend einen Bearbeitungskopf (1) gemäss einem der vorstehenden Ansprüche.

## Claims

1. A processing head (1) for the surface processing by means of a laser beam, wherein the processing head (1) comprises a through passage (2) for a laser beam having a longitudinal axis (A), at least one powder feed channel (3) and a cooling passage (4) for cooling the processing head (1), and the processing head (1) is configured of at least two parts and comprises a one-piece body (5) and a sleeve (6) for the arrangement at the body (5), and
the through passage (2) of the laser is configured in the body (5), and
the body (5) at least partly forms a first side wall (7) of the cooling passage (4) and wherein the sleeve (6) at least partly forms a second sidewall (8) of the cooling passage (4),
**characterized in that** the powder feed channel (3) is configured in the body (5).

2. A processing head (1) in accordance with claim 1, **characterized in that** the body (5) has a first feed passage (13) and a second feed passage (14) for the supply and discharge of a cooling medium to and from the cooling passage (4).

3. A processing head (1) in accordance with claim 1 or claim 2, **characterized in that** the processing head (1) consists of the body (5) and the sleeve (6), and optionally seals (9).

4. A processing head (1) in accordance with any of the previous claims, **characterized in that** the cooling passage (4) is configured as a cooling coil or as a cooling spiral.

5. A processing head (1) in accordance with any of the previous claims, **characterized in that** the cooling passage (4) is arranged in the body (5) or in the sleeve (6).

6. A processing head (1) in accordance with claim 1 to 4, **characterized in that** the cooling passage (4) is arranged in the body (5) and in the sleeve (6).

7. A processing head (1) in accordance with any of the previous claims, **characterized in that** a seal (9), in particular a sealing ring, is arranged in a region facing an outlet side (10) of the laser beam for sealing the cooling passage (4).

8. A processing head (1) in accordance with any of the previous claims, **characterized in that** the body (5) and the sleeve (6) are configured, at least in a section, conically tapering towards the outlet side (10).

9. A processing head (1) in accordance with any of the previous claims, **characterized in that** the cooling passage (4) is arranged at least partly, preferably completely, in the tapering section.

10. A processing head (1) in accordance with any of the previous claims, **characterized in that** the cooling passage (4) has a first feed opening (11) and a second feed opening (12) for the supply and/or removal of a cooling medium, wherein the first feed opening (11) and the second feed opening (12) are arranged spaced apart from one another in parallel to the longitudinal axis (A).

11. A processing head (1) in accordance with claims 2 and claim 10, **characterized in that**, the first feed opening (11) is in flow communication with the first feed passage (13) and the second feed opening (12) is in flow communication with the second feed passage (14), and wherein the first feed passage (13) and/or the second feed passage (14) are arranged, at least in a section, at the same angle of inclination (B) with respect to the longitudinal axis (A) as the powder supply passage (3) is arranged.

12. A processing head (1) in accordance with any of the previous claims, **characterized in that** the cooling passage (4) is arranged at a side of the through passage (2) for a laser remote from the longitudinal axis (A), in particular at a side of the through passage of the at least one powder supply passage (3).

13. A processing head (1) in accordance with any of the previous claims, **characterized in that** the sleeve (6), and in particular the body (5), are produced from a material having a thermal conductivity coefficient larger than 300 W/(m K), preferably coefficient larger than 340 W/(m K), more preferably larger than 380 W/(m K).

14. A processing unit (15) for surface processing by means of a laser beam comprising a processing head (1) in accordance with any one of the previous claims.

## Revendications

1. Une tête de traitement (1) pour le traitement de surface par faisceau laser, dans laquelle la tête de traitement (1) comprend un canal de passage du laser (2) avec un axe longitudinal (A), au moins un canal d'alimentation en poudre (3) et un canal de refroidissement (4) pour refroidir la tête de traitement (1); et la tête de traitement (1) est formée au moins en deux parties, et comprend un corps (5) d'une seule pièce et une douille (6) à disposer sur le corps (5); et le canal de passage du laser (2) est formé dans le corps (5); et le corps (5) forme au moins partiellement une première paroi latérale (7) du canal de refroidissement (4) et dans laquelle la douille (6) forme au moins partiellement une deuxième paroi latérale (8) du canal de refroidissement (4), **caractérisé en ce que** le canal d'alimentation en poudre (3) est formé dans le corps (5).

2. Une tête de traitement (1) selon la revendication 1, **caractérisé en ce que** le corps (5) présente un premier canal de transport (13) et un deuxième canal de transport (14) pour l'alimentation et la décharge d'agent réfrigérant vers et depuis le canal de refroidissement (4).

3. Une tête de traitement (1) selon la revendication 1 ou 2, **caractérisé en ce que** la tête de traitement (1) se compose de la tête (5), de la douille (6) et éventuellement de joints (9).

4. Une tête de traitement (1) selon l'une des revendications précédentes, **caractérisé en ce que** le canal de refroidissement (4) est conçu comme un serpentin de refroidissement ou une spirale de refroidissement.

5. Une tête de traitement (1) selon l'une des revendications précédentes, **caractérisé en ce que** le canal de refroidissement (4) est disposé dans le corps (5) ou dans la douille (6).

6. Une tête de traitement (1) selon l'une des revendications 1 à 4, **caractérisé en ce que** le canal de refroidissement (4) est disposé dans le corps (5) et dans la douille (6).

7. Une tête de traitement (1) selon l'une des revendications précédentes, **caractérisé en ce qu'**un joint (9), en particulier une bague d'étanchéité, est disposé dans une zone orientée vers un côté de sortie (10) du faisceau laser pour étancher le canal de refroidissement (4).

8. Une tête de traitement (1) selon l'une des revendications précédentes, **caractérisé en ce que** le corps (5) et la douille (6) sont conçus en particulier pour être coniques dans au moins une section vers le côté de sortie (10).

9. Une tête de traitement (1) selon l'une des revendications précédentes, **caractérisé en ce que** le canal de refroidissement (4) est disposé au moins partiellement, de préférence complètement, dans la section conique.

10. Une tête de traitement (1) selon l'une des revendications précédentes, **caractérisé en ce que** le canal de refroidissement (4) présente une première ouverture de transport (11) et une deuxième ouverture de transport (12) pour l'alimentation et/ou la décharge d'un agent réfrigérant, la première ouverture de transport (11) et la deuxième ouverture de transport (12) étant espacées l'une de l'autre parallèlement à l'axe longitudinal (A).

11. Une tête de traitement (1) selon les revendications 2 et 10, **caractérisé en ce que** la première ouverture de transport (11) est en communication fluide avec le premier canal de transport (13) et la deuxième ouverture de transport (12) est en communication fluide avec le deuxième canal de transport (14), et dans laquelle le premier canal de transport (13) et/ou le deuxième canal de transport (14) sont disposés, au moins dans une section, sensiblement selon un même angle d'inclinaison (B) par rapport à l'axe longitudinal (A) que le canal d'alimentation en poudre (3).

12. Une tête de traitement (1) selon l'une des revendications précédentes, **caractérisé en ce que** le canal de refroidissement (4) est disposé sur un côté du canal de passage du laser (2) et en particulier d'au moins un canal d'alimentation en poudre (3) opposé à l'axe longitudinal (A).

13. Une tête de traitement (1) selon l'une des revendications précédentes, **caractérisé en ce que** la douille (6) et en particulier le corps (5) est essentiellement fabriqué en un matériau ayant une conductivité thermique supérieure à 300 W/ (m x K), de préférence supérieure à 340 W/ (m x K) et particulièrement préférablement supérieure à 380 W/ (m x K).

14. Un dispositif de traitement (15) pour le traitement de surface au moyen d'un faisceau laser comprenant une tête de traitement (1) selon l'une des revendications précédentes.
